(19) Europäisches Patentamt
European Patent Office
Office européen des brevets

(11) **EP 3 503 378 B1**

(12) **EUROPEAN PATENT SPECIFICATION**

(45) Date of publication and mention
of the grant of the patent:
**17.02.2021  Bulletin 2021/07**

(51) Int Cl.:
***H02P 6/16*** *(2016.01)*      ***H02P 21/18*** *(2016.01)*

(21) Application number: **17209689.3**

(22) Date of filing: **21.12.2017**

(54) **METHOD AND APPARATUS FOR DETERMINING A MEASURING OFFSET OF A ROTOR POSITION SENSOR**

VERFAHREN UND VORRICHTUNG ZUR BESTIMMUNG EINES MESSVERSATZES EINES ROTORPOSITIONSSENSORS

PROCÉDÉ ET APPAREIL PERMETTANT DE DÉTERMINER UN DÉCALAGE DE MESURE D'UN CAPTEUR DE POSITION DE ROTOR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.06.2019  Bulletin 2019/26**

(73) Proprietor: **Valeo Siemens eAutomotive Germany GmbH**
**91056 Erlangen (DE)**

(72) Inventors:
• **SAHHARY, Bassel**
  **91058 Erlangen (DE)**
• **WALTER, Andreas**
  **90411 Nürnberg (DE)**

(74) Representative: **Dr. Gassner & Partner mbB**
**Wetterkreuz 3**
**91058 Erlangen (DE)**

(56) References cited:
**US-A1- 2013 082 516     US-A1- 2015 106 043**

## Description

The present invention relates to a method and an apparatus for determining a measuring offset of a rotor position sensor.

For a field-oriented control of an electric machine an AC current provided by an inverter is controlled by means of an angle of a magnetic flux depending on a rotor position. In order to detect the rotor position, the use of a rotor position sensor is widely known. Due to mounting inaccuracies, a mounting offset of the rotor position sensor may be present resulting in a measuring offset between a zero-angle of the rotor position sensor and an angle of a d-axis of the electric machine. The measuring offset has to be determined for correcting the control of the inverter in order to achieve maximum torque and maximum utilization of the electric machine. With respect to automotive applications, the measuring offset has to be determined with a certain automotive safety integrity level (ASIL).

US 2015/106043 A1 discloses a device for detecting an overcurrent attributable to a short-circuit abnormality occurring in an electrical drive control system. This conventional device comprises a rotational position detector that detects a rotational angle of the motor.

Conventionally, the measuring offset is determined by electromagnetic-force-based methods, in which voltages induced into stator windings of the electric machine are measured, when currents flowing into the electric machine are controlled to be zero. To achieve a certain ASIL, e.g. ASIL C, the voltage measurement has to be performed with very effortful safety measures.

Thus, it is an object of the present invention to provide an improved method for determining a rotor position offset with high integrity, particularly with less measurement effort.

According to the invention, the above object is achieved by a method for determining a measuring offset of a rotor position sensor assigned to a rotor of an electric machine, wherein stator windings of the electric machine are supplied by phase lines between an inverter and the stator windings, comprising the following steps: providing a control signal causing the phase lines to be short-circuited when the rotor rotates with a rotation rate; computing a first current angle information based on a current information, which represents a d-current and a q-current being determined based on a rotor position information provided by the rotor position sensor while the phase lines are short-circuited; and determining the measuring offset based on the first current angle information and a second current angle information being based on an impedance information concerning the electric machine and on the rotation rate of the rotor.

The invention is based on the consideration to determine the measuring offset by a combination of the first current angle information being computed by means of detected currents and the second current angle information being computed substantially by means of the, particularly static, i.e. operation-independent, impedance information, when both computations refer to a short-circuited state and the same rotation rate of the electric machine. Therein, a measurement of a voltage representing the electromagnetic force at the phase lines is not required. As the d-current information has typically a high automotive safety integrity level (ASIL), e.g. ASIL C, the determined measuring offset has the same ASIL. In other words, the determined measuring offset inherits the ASIL of the current information.

Advantageously, the measuring offset can be determined with less measurement effort as a voltage measurement at the phase lines is omitted. Since a detection of the d-current and a q-current is usually performed when controlling the inverter, no further measurement is necessary to obtain the measuring offset with a corresponding integrity.

Typically, the rotor position sensor is assigned to the rotor by attaching it mechanically to the electric machine, particularly to the rotor. The AC current may be a three-phase AC current. Desirably, the electric machine is a permanent magnet synchronous machine.

The inventive method may comprise a step of computing the second current angle information.

Preferably, the impedance information represents a stator resistance and/or a stator inductance. By means of these electric parameters of the electric machine a computation of the second current angle information is basically possible. The stator resistance and the stator inductance may be obtained from a memory storing corresponding values for a plurality of electric machines or may be measured for the specific electric machine.

It is furthermore preferred, that an arctangent or a arccotangent function is used for calculating the first current angle information and/or the second current angle information. The function is preferably an atan2 or an acot2 function, respectively, owing to which an angle can be calculated by means of two arguments for a value range of 360°.

The measuring offset may be determined by subtracting current angles represented by the first current angle information and the second current angle information.

According to a first alternative embodiment, the control signal is provided to a mechanical switching device connected to the phase lines. The switching device may comprise at least one relay connected between each pair of phase lines and being controllable by the control signal. As the voltage drop over a switching path of the relay can typically be neglected, the second current angle information may be determined based on a ratio of the stator resistance to the product of the stator inductance and the rotation rate or a corresponding inverse ratio, respectively. Note that no actual operation of the electric machine is necessary to compute the aforementioned ratios. Thus, a respective ratio can be computed just mathematically.

According to a second alternative embodiment, the control signal is provided to the inverter, which actively short-circuits the phase lines by controlling semiconductor switching elements of the inverter. Such an active short-circuit (ASC) function is a typical safety function of automotive inverters, which allows the electric machine to adopt a safe state without undesired braking torques at high rotation rates. Advantageously, no additional functions have to be implemented in the inverter to perform such an ASC.

Therein, the semiconductor switching elements may be arranged in half bridges connected between a high potential and a low potential of a DC link of the inverter, wherein for actively short-circuiting the phase lines the switching elements connected to the high potential may be controlled to be turned on and the switching elements connected to the low potential may be controlled to be turned off. Alternatively, for actively short-circuiting the phase lines the switching elements connected to the low potential are controlled to be turned on and the switching elements connected to the high potential are controlled to be turned off.

Advantageously, the second current angle information is based additionally on switching path voltage information representing a voltage dropping over a switching path of the switching elements and/or a short-circuit current information representing a short-circuit current along the phase lines. This allows to correct an influence of the voltage dropping over the switching path during the operation of the electric machine Thus, the measuring offset can be determined more accurately. With respect to the switching elements being insulated gate bipolar transistors, the voltage may be a collector-emitter-voltage. With respect to the switching elements being insulated gate field-effect transistors the voltage may be a drain-source-voltage. Therein, the second current angle information may be determined based on a ratio of the stator resistance to the product of the stator inductance and the rotation rate or a corresponding inverse ratio, respectively, wherein a correction value being a function of the voltage dropping over the switching path and/or the short-circuit current is added to the ratio. A switching path voltage information representing the voltage dropping over the switching path and/or a short-circuit current information representing the short-circuit current may be stored in the memory additionally to the impedance information.

When performing the method according to the invention, a rotation rate of at least 500 min$^{-1}$ and/or at most 15000 min$^{-1}$ is used, typically.

Furthermore, the rotor position sensor may be a resolver.

Preferably, the electric machine is disposed at a test bench, particularly during an end-of-line-test, when the phase lines are short-circuited.

Desirably, a measuring offset information representing the determined measuring offset is transmitted to the inverter for storing it in there. Therein, the stored measuring offset information may be used for correcting future rotor position information provided by the rotor position sensor.

Besides, the present invention refers to an apparatus for determining a measuring offset of a rotor position sensor assigned to a rotor of an electric machine, wherein the apparatus is configured to perform a method according to the invention, when stator windings of the electric machine are supplied via phase lines between the inverter and the stator windings. The apparatus may comprise the inverter and/or the electric machine. Alternatively, the apparatus may be integrated into the inverter.

All statements referring to the inventive method apply analogously to the inventive apparatus, so that the above-mentioned advantages of the inventive method may be achieved as well.

Further details and advantages of the invention are disclosed in the following, wherein reference is made to the drawings showing:

Fig. 1   a block diagram of an embodiment of an apparatus for determining a measuring offset of a rotor position sensor;

Fig. 2   a diagram of an electric machine with a rotor, to which the rotor position sensor is assigned;

Fig. 3   a flow chart of an embodiment of a method for determining the measuring offset of the rotor position sensor;

Fig. 4   a diagram of electric voltages and currents in a short-circuited state of the electric machine; and

Fig. 5   a diagram of current angles for determining the measuring offset.

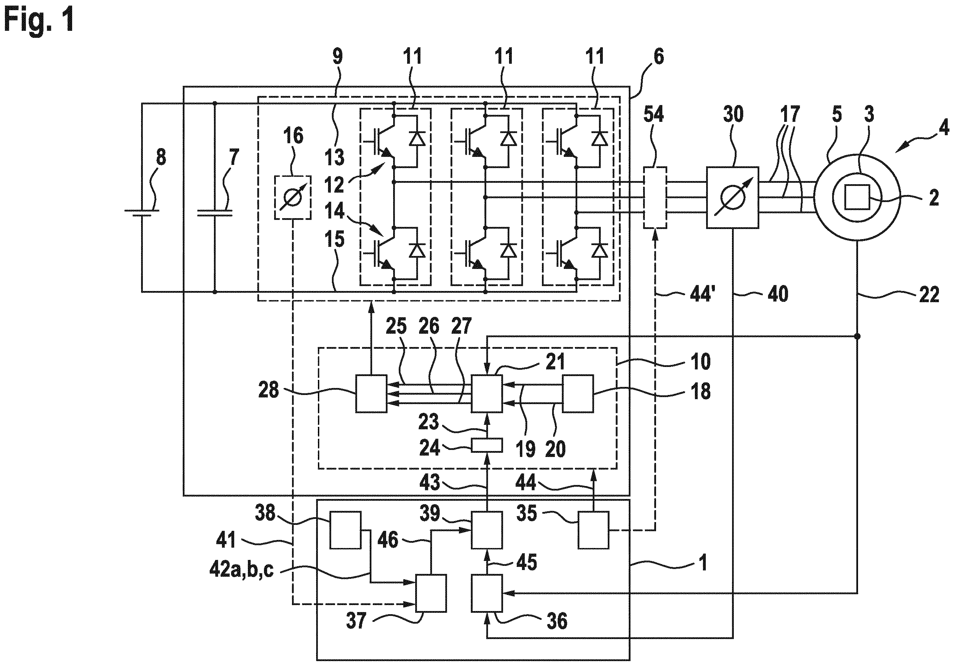

Fig. 1 is a block diagram of an embodiment of an apparatus 1 for determining a measuring offset of the rotor position sensor 2. The rotor position sensor 2 is a resolver assigned to a rotor 3 of an electric machine 4 having a stator 5. Stator windings of the stator 5 are supplied by an inverter 6. Although depicted as a separate element, the apparatus 1 may be integrated into the inverter 6.

The inverter 6 comprises a DC link with a DC link capacitor 7 connected to a DC voltage source 8, a power unit 9 and a control unit 10. The power unit 9 comprises a number of half bridges 11, each comprising a semiconductor switching element 12 connected to a high potential 13 of the DC link and a semiconductor switching element 14 connected to low potential 15 of the DC link. The switching elements 12, 14 may comprise an insulated gate bipolar transistor (IGBT) or an insulated gate field-effect transistor (IGFET).

The control unit 10 is configured to control the power unit 9 to convert the voltage of the DC link into a three-phase AC current provided to phase lines 17 between the inverter 6 and the electric machine 4. The control unit 10 comprises a controlling section 18 configured to provide a value 19 of a desired d-voltage and a value 20 of a desired q-voltage to be provided to the stator windings in a normal operation mode of the electric machine 4. The values 19, 20 are provided to a transformation section 21 of the control unit 10, which obtains a rotor position information 22 from the rotor position sensor 2 and a measuring offset information 23 stored in a memory section 24 of the control unit 10. By means of the rotor position information 22 and the measuring offset information 23 the transformation section 21 transforms the values 19, 20 being in dq-coordinates into values 25, 26, 27 in uvw-coordinates corresponding to the phase lines 17 or the stator windings, respectively. Based on the values 25, 26, 27 a modulation section 28 of the control unit 10 provides pulse-width-modulated switching signals 29 to the switching elements 12, 14 of the power unit 9 such that the desired d-voltage and the desired q-voltage represented by the values 19, 20 are provided to the electric machine 4.

Moreover, a current detection means 30 is provided, which is configured to detect a current flowing along the phase lines 17. Alternatively, the current detection means 30 is a part of the inverter 6.

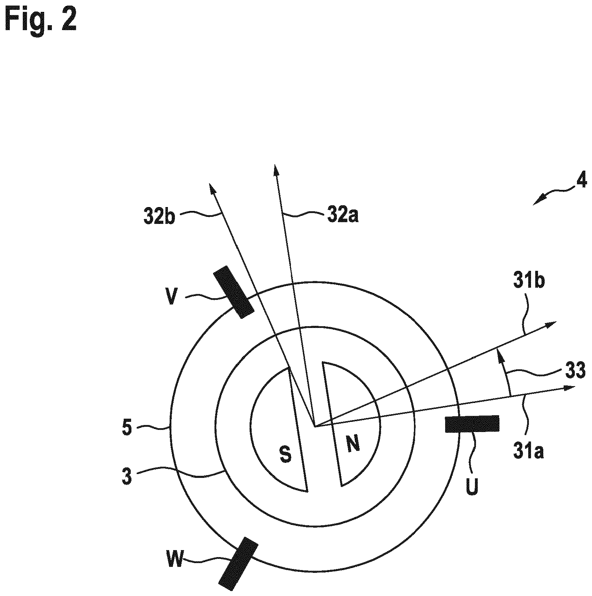

Fig. 2 is a detailed diagram of the electric machine 4, which is a permanent magnet synchronous machine. The stator 5 comprises poles U, V, W referring to the aforementioned uvw-coordinates. The rotor 3 has two magnetic poles N, S defining a d-axis 31a and a q-axis 32a of the dq-coordinates.

However, due to mounting inaccuracies of the rotor position sensor 2, the rotor position information 22 provided by the rotor position sensor 2 refers to a d-axis 31b and a q-axis 32b having the measuring offset represented by an offset angle 33 between the d-axes 31a, 31b. When the measuring offset is known, it can be stored in the memory section 24 of the control unit 10 in order to correct the rotor position information 22.

The apparatus 1 for determining the measuring offset is used at a test bench during an end of line test of the electric machine 4. The apparatus 1 comprises a controlling section 35 a first computation section 36, a second computation section 37, a memory section 38 and a determination section 39.

The first computation section 36 is configured to obtain the rotor position information 22 from the rotor position sensor 2 and a current measurement information 40 from the current detection means 30.

The memory section 38 is configured to provide an impedance information 42a, representing a stator resistance and a stator inductance of the electric machine 4, to the second computation section 37. Furthermore, the memory section 38 is configured to provide a switching path voltage information 42b representing a voltage dropping over a switching path of the switching elements 12, 14, i.e. a collector-emitter-voltage in the case of IGBT or a drain-source-voltage in the case of IGFET, when being closed or being turned on, respectively. Moreover, the memory section 38 is configured to provide a short-circuit current information 42c representing a short-circuit current along the phase lines 17. Therein, the information 42a, 42b, 42c are static information that have been determined experimentally or analytically.

The determination section 39 is configured to obtain a first current angle information 45 provided by the first competition section 36 and a second current angle information 46 provided by the second computation section 37. Further, the determination section 39 is configured transmit a measuring offset information 43 to the inverter 6, particularly to its control unit 10.

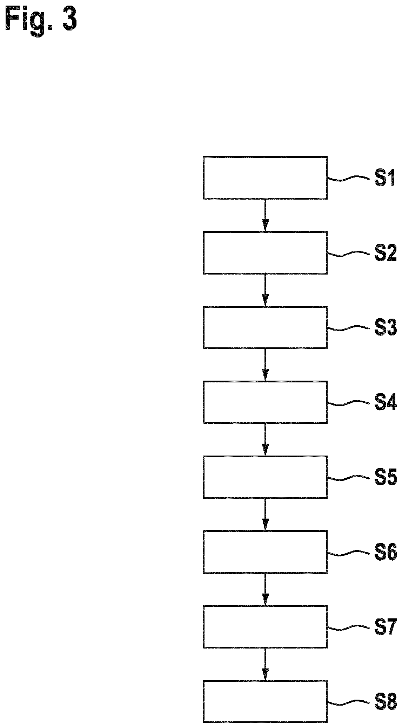

Fig. 3 is a block diagram of a method for determining the measuring offset of the rotor position sensor 2, wherein the apparatus 1 is configured to perform the method.

In a first step S1 the controlling section 35 provides a control signal 44 to the control unit 10 of the inverter 6 to rotate the rotor 3 with a predefined rotation rate of e.g. 3000 min$^{-1}$.

When the rotor 3 rotates with the predefined rotation rate, the controlling section 35 provides the control signal 44 in a step S2 such that the phase lines 17 are actively short-circuited. Thereto, the switching elements 12, 14 are controlled by the switching signals 29 such that the switching elements 14 connected to the low potential 15 are controlled to be turned on and the switching elements connected 12 to the high potential 13 are controlled to be turned off. Alternatively, the switching elements 12 are controlled to be turned on and the switching elements 14 are controlled to be turned off.

In a following step S3 the first computation section 36 determines a current information, which represents a d-current and a q-current based on the rotor position information 22 provided by the rotor position sensor 2 while the phase lines 17 are short-circuited and the rotor 3 rotates with the predefined rotation rate. The determination of the current information is performed by transforming measured current values represented by the current measurement information 40 in uvw-coordinates into to dq-coordinates using the rotor position information 22.

Next, in a step S4 the first computation section 36 computes the first current angle information 45 based on the current information. This is done according to the following equation:

$$\vartheta_{meas} = \operatorname{atan2}(i_q, i_d)$$

Therein, $\vartheta_{meas}$ denotes a calculated current angle represented by the first current angle information 45, $i_q$ denotes the determined q-current and $i_d$ denotes the determined d-current. The function atan2($\cdot,\cdot$) allows the

calculation of an angle by means of two arguments for a value range of 360°.

In the following step S5 the second computation section 37 computes the second current angle information 46 based on the rotation rate of the rotor 3 and based on the impedance information 42a the switching path voltage information 42b and the short-circuit current information 42c each being obtained from the memory section 38.

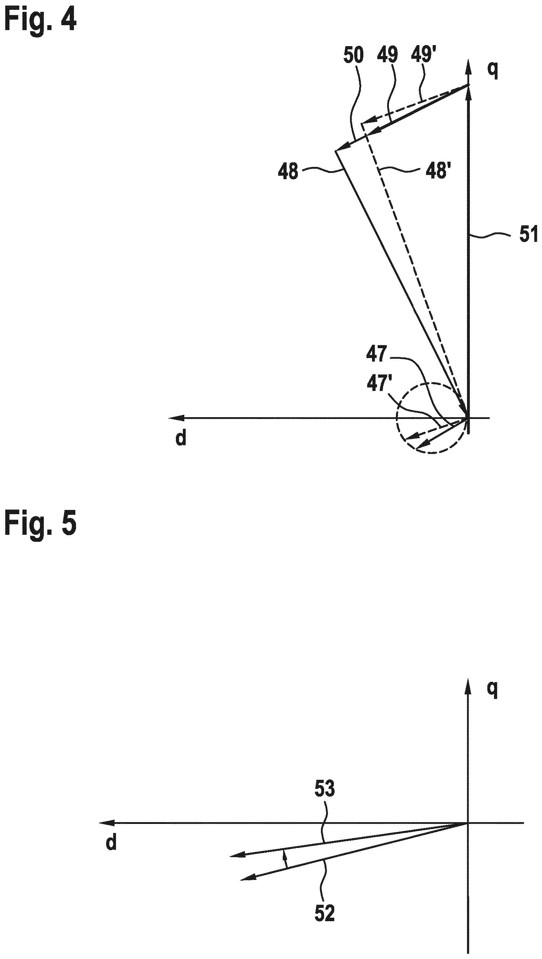

This computation is described in detail with reference to Fig. 4, which is a diagram of voltages and currents in the dq-coordinate system. Therein, an arrow 47 represents a short-circuit current $i_{sc}$ being represented by the short-circuit current information 42c. An arrow 48 represents a voltage dropping over an inductance of the stator 5:

$$U_L = \omega \cdot L_s \cdot i_{sc}$$

Therein, $\omega$ denotes the rotation rate and $L_s$ denotes the stator inductance represented by the impedance information 42a.

An arrow 49 represents a voltage dropping over a resistance of the stator 5:

$$U_R = R_s \cdot i_{sc}$$

Therein, $R_s$ denotes the stator resistance represented by the impedance information 42a.

An arrow 50 represents the voltage $U_{sp}$ dropping over the switching path of the switching element 12, 14 being closed or being turned on, respectively. The voltage $U_{sp}$ is represented by the switching path voltage information 42b.

Finally, an arrow 51 represents the electromagnetic force

$$U_{emf} = \omega \cdot \Psi_{PM}.$$

Therein, $\Psi_{PM}$ denotes the magnetic flux of the magnetic poles N, S.

Consequently, a current angle $\vartheta_{calc}$ represented by the second current angle information 46 can be calculated by means of the equation

$$\vartheta_{calc} = 270° - \text{atan2}(U_L, U_R + U_{sp})$$

Note that by means of the term $U_d + U_{sp}$ the influence of the voltage dropping over the switching path is corrected. Alternatively, the voltage dropping over the switching path may be neglected resulting in a less accurate computation.

In a step S6 the determination section 39 determines the measuring offset based on the first current angle information 45 and the second current angle information 46 by means of the following equation:

$$\Delta\vartheta = \vartheta_{calc} - \vartheta_{meas}$$

With reference to Fig. 5, which is a diagram of angles in the dq-coordinate system, an arrow 52 represents the first current angle $\vartheta_{meas}$ of 185°, exemplarily, and an arrow 53 represents the second current angle $\vartheta_{calc}$ of 182°, exemplarily resulting in a measuring offset of $\Delta\vartheta = +3°$.

Subsequently, in a step S7 the determination section 39 transmits a measuring offset information 43 representing the determined measuring offset to the control unit 10, which stores the determined measuring offset in a step S8 in the memory section 24 for correcting future rotor position information 22 provided by the rotor position sensor 2.

According to a second embodiment of the method and the apparatus 1 a mechanical switching device 54 connected to the phase lines 17 is provided, which may be part of the apparatus 1 or the inverter 6 or may be a separate device. The switching device 54 comprises relays connected between each pair of phase lines 17.

In the step S2 the controlling section 35 provides a control signal 44' to the switching device 54 instead of providing the control signal 44 to the control unit 10. The control signal 44' causes the relays to close.

In the step S5 the second computation section 37 computes the second current angle $\vartheta_c$ without considering the voltage dropping over a switching path as such a voltage drop can be neglected in the case of using the mechanical switching device 54. This is described by the equation:

$$\vartheta_{calc} = 270° - \text{atan2}(U_L, U_R)$$

With reference to Fig. 4 a dashed arrow 47' represents the short-circuit current $i_{sc}$ and dashed arrows 48', 49' represent the voltages $U_L$, $U_R$ in the case of using the switching device 54. Note that $\vartheta_{calc}$ is independent of $i_{sc}$ since $i_{sc}$ is a factor of $U_L$ and $U_R$. Consequently, the second current angle can be computed without considering the switching path voltage information 42b and the short-circuit current information 42c.

According to a further embodiment corresponding to any of the aforementioned ones, the second current angle information 45 has been computed as described with respect to the step S5 and is stored in the memory 38 either for a specific rotation rate or as a look-up table for different ration rates. Thus, in the step S5 according to the present embodiment the second current angle information 45 is provided by the memory section 38 to the determination section 39 instead of being computed.

According to a further embodiment corresponding to any of the aforementioned ones, an acot2 function is used with interchanged arguments.

According to a further embodiment corresponding to any of the aforementioned ones, the stator resistance and the stator inductance are measured at the electric machine 4, therein omitting the memory section 38.

According to a further embodiment of the method and the apparatus 1, the voltage dropping over the switching path is represented by a voltage measurement information 41 obtained from a voltage measurement means 16 of the power unit 6, in place of being represented by the switching path voltage information 42b stored in the memory section 38. Thus, the voltage dropping over the switching path is measured instead of using typical values.

According to a further embodiment corresponding to any of the aforementioned ones, the apparatus 1 comprises the inverter 6 and/or the electric machine 3 and/or the DC voltage source 8.

## Claims

1. Method for determining a measuring offset of a rotor position sensor (2) assigned to a rotor (3) of an electric machine (4), wherein stator windings of the electric machine (4) are supplied by phase lines (17) between an inverter (6) and the stator windings, comprising the following steps:

   - providing a control signal (44) causing the phase lines (17) to be short-circuited when the rotor (3) rotates with a rotation rate;
   - computing a first current angle information (45) based on a current information, which represents a d-current and a q-current being determined based on a rotor position information (22) provided by the rotor position sensor (2) while the phase lines (17) are short-circuited; and
   - determining the measuring offset based on the first current angle information (45) and a second current angle information (46) being based on an impedance information (42a) concerning the electric machine (4) and on the rotation rate of the rotor (3).

2. Method according to claim 1, comprising a step of computing the second current angle information (46).

3. Method according to claim 1 or 2, wherein the impedance information (42a) represents a stator resistance and/or a stator inductance.

4. Method according to any of the preceding claims, wherein an arctangent or a arccotangent function, particularly an atan2 or an acot2 function, is used for calculating the first current angle information (45) and/or the second current angle information (46).

5. Method according to any of the preceding claims, wherein the measuring offset is determined by subtracting current angles represented by the first current angle information (45) and the second current angle information (46).

6. Method according to any of the preceding claims, wherein the control signal (44) is provided to a mechanical switching device (54) connected to the phase lines (17).

7. Method according to any of claims 1 to 5, wherein the control signal (44) is provided to the inverter (6), which actively short-circuits the phase lines (17) by controlling semiconductor switching elements (12, 14) of the inverter (6).

8. Method according to claim 7, wherein the semiconductor switching (12,14) elements are arranged in half bridges (11) connected between a high potential (13) and a low potential (15) of a DC link of the inverter, wherein for actively short-circuiting the phase lines (17) either the switching elements (12) connected to the high potential (13) are controlled to be turned on and the switching elements (14) connected to the low potential (15) are controlled to be turned off or the switching elements (14) connected to the low potential (15) are controlled to be turned on and the switching elements (12) connected to the high potential (13) are controlled to be turned off.

9. Method according to claim 6 or 7, wherein the second current angle information (46) is based additionally on a switching path voltage information (42b) representing a voltage dropping over a switching path of the switching elements (12, 14) and/or a short-circuit current information (42c) representing a short-circuit current along the phase lines (17).

10. Method according to any of the preceding claims, wherein a rotation rate of a least 500 $\text{min}^{-1}$ and/or at most 15000 $\text{min}^{-1}$ is used.

11. Method according to any of the preceding claims, wherein the rotor position sensor (2) is a resolver.

12. Method according to any of the preceding claims, wherein the electric machine (4) is disposed at a test bench, particularly during an end-of-line-test, when the phase lines are short-circuited.

13. Method according to any of the preceding claims, wherein a measuring offset information (43) representing the determined measuring offset is transmitted to the inverter (6) for storing it in there.

**14.** Method according to claim 13, wherein the stored measuring offset information (43) is used for correcting future rotor position information (22) provided by the rotor position sensor (2).

**15.** Apparatus (1) for determining a measuring offset of a rotor position sensor (2) assigned to a rotor (3) of an electric machine (4), wherein the apparatus (1) is configured to perform a method according to any of claims 1 to 13, when stator windings of the electric machine (4) are supplied via phase lines (17) between the inverter (6) and the stator windings, the inverter (6) comprising switching elements (12, 14) configured to short-circuit the phase lines (17).

**Patentansprüche**

**1.** Verfahren zur Bestimmung eines Messoffsets eines einem Rotor (3) einer elektrischen Maschine (4) zugeordneten Rotorpositionssensors (2), wobei Statorwicklungen der elektrischen Maschine (4) durch Phasenleitungen (17) zwischen einem Wechselrichter (6) und den Statorwicklungen gespeist werden, umfassend die folgenden Schritte:

- Bereitstellen eines Steuersignals (44), das bewirkt, dass die Phasenleitungen (17) kurzgeschlossen werden, wenn sich der Rotor (3) mit einer Drehgeschwindigkeit dreht;
- Berechnen einer ersten Stromwinkelinformation (45) auf der Grundlage einer Strominformation, die einen d-Strom und einen q-Strom darstellt, die auf der Grundlage einer Rotorpositionsinformation (22) bestimmt wird, die von dem Rotorpositionssensor (2) geliefert wird, während die Phasenleitungen (17) kurzgeschlossen sind; und
- Bestimmen des Messoffsets basierend auf der ersten Stromwinkelinformation (45) und einer zweiten Stromwinkelinformation (46), die auf einer Impedanzinformation (42a) bezüglich der elektrischen Maschine (4) und auf der Drehzahl des Rotors (3) basiert.

**2.** Verfahren nach Anspruch 1, umfassend einen Schritt zur Berechnung der zweiten Stromwinkelinformation (46).

**3.** Verfahren nach Anspruch 1 oder 2, wobei die Impedanzinformation (42a) einen Statorwiderstand und/oder eine Statorinduktivität darstellt.

**4.** Verfahren nach einem der vorstehenden Ansprüche, wobei eine Arkustangens- oder eine Arkuscotangensfunktion, insbesondere eine atan2- oder eine acot2-Funktion, zur Berechnung der ersten Stromwinkelinformation (45) und/oder der zweiten Stromwinkelinformation (46) verwendet wird.

**5.** Verfahren gemäß einem der vorstehenden Ansprüche, bei dem der Messoffset durch Subtrahieren von Stromwinkeln bestimmt wird, die durch die erste Stromwinkelinformation (45) und die zweite Stromwinkelinformation (46) dargestellt werden.

**6.** Verfahren nach einem der vorstehenden Ansprüche, bei dem das Steuersignal (44) einer mit den Phasenleitungen (17) verbundenen mechanischen Schaltvorrichtung (54) zugeführt wird.

**7.** Verfahren nach einem der Ansprüche 1 bis 5, bei dem das Steuersignal (44) dem Wechselrichter (6) zugeführt wird, der die Phasenleitungen (17) aktiv kurzschließt, indem er Halbleiterschaltelemente (12, 14) des Wechselrichters (6) steuert.

**8.** Verfahren nach Anspruch 7, wobei die Halbleiterschaltelemente (12, 14) in Halbbrücken (11) angeordnet sind, die zwischen einem hohen Potential (13) und einem niedrigen Potential (15) eines Gleichspannungszwischenkreises des Wechselrichters geschaltet sind, wobei zum aktiven Kurzschließen der Phasenleitungen (17) entweder die mit dem hohen Potential (13) verbundenen Schaltelemente (12) so gesteuert werden, dass sie eingeschaltet werden, und die mit dem niedrigen Potential (15) verbundenen Schaltelemente (14) so gesteuert werden, dass sie ausgeschaltet werden, oder dass die mit dem niedrigen Potential (15) verbundenen Schaltelemente (14) so gesteuert werden, dass sie eingeschaltet werden, und die mit dem hohen Potential (13) verbundenen Schaltelemente (12) so gesteuert werden, dass sie ausgeschaltet werden.

**9.** Verfahren nach Anspruch 6 oder 7, wobei die zweite Stromwinkelinformation (46) zusätzlich auf einer Schaltpfad-Spannungsinformation (42b), die eine über einen Schaltpfad der Schaltelemente (12, 14) abfallende Spannung darstellt, und/oder auf einer Kurzschlussstrominformation (42c), die einen Kurzschlussstrom entlang der Phasenleitungen (17) darstellt, basiert.

**10.** Verfahren nach einem der vorstehenden Ansprüche, wobei eine Rotationsgeschwindigkeit von mindestens 500 min$^{-1}$ und/oder höchstens 15000 min$^{-1}$ verwendet wird.

**11.** Verfahren nach einem der vorstehenden Ansprüche, bei dem der Rotorpositionssensor (2) ein Resolver ist.

**12.** Verfahren nach einem der vorstehenden Ansprüche, bei dem die elektrische Maschine (4) an einem Prüfstand angeordnet wird, insbesondere während eines End-of-Line-Tests, wenn die Phasenleitungen kurzgeschlossen werden.

13. Verfahren nach einem der vorstehenden Ansprüche, bei dem eine Messoffset-Information (43), die den ermittelten Messoffset darstellt, an den Wechselrichter (6) übertragen wird, um sie dort zu speichern.

14. Verfahren nach Anspruch 13, wobei die gespeicherte Messoffset-Information (43) zur Korrektur der zukünftigen Rotorpositionsinformation (22) verwendet wird, die vom Rotorpositionssensor (2) geliefert wird.

15. Vorrichtung (1) zum Bestimmen eines Messoffsets eines Rotorpositionssensors (2), der einem Rotor (3) einer elektrischen Maschine (4) zugeordnet ist, wobei die Vorrichtung (1) so konfiguriert ist, dass sie ein Verfahren nach einem der Ansprüche 1 bis 13 durchführt, wenn Statorwicklungen der elektrischen Maschine (4) über Phasenleitungen (17) zwischen dem Wechselrichter (6) und den Statorwicklungen gespeist werden, wobei der Wechselrichter (6) Schaltelemente (12, 14) umfasst, die zum Kurzschließen der Phasenleitungen (17) konfiguriert sind.

**Revendications**

1. Procédé pour déterminer un décalage de mesure d'un capteur de position de rotor (2) affecté à un rotor (3) d'une machine électrique (4), en ce que des enroulements du stator de la machine électrique (4) sont alimentés par des lignes de phase (17) entre un onduleur (6) et les enroulements du stator, comprenant les étapes suivantes consistant à :

    - fournir un signal de commande (44) provoquant le court-circuit des lignes de phase (17) lorsque le rotor (3) tourne à une vitesse de rotation ;
    - calculer une première information d'angle de courant (45) sur la base d'une information de courant qui représente un courant d et un courant q qui sont déterminés sur la base d'une information de position de rotor (22) fournie par le capteur de position de rotor (2) tandis que les lignes de phase (17) sont court-circuitées ; et
    - déterminer le décalage de mesure sur la base de la première information d'angle de courant (45) et une seconde information d'angle de courant (46) sur la base d'une information d'impédance (42a) concernant la machine électrique (4) et sur la vitesse de rotation du rotor (3).

2. Procédé selon la revendication 1, comprenant une étape consistant au calcul de la seconde information d'angle de courant (46).

3. Procédé selon la revendication 1 ou 2, en ce que l'information d'impédance (42a) représente une résistance statorique et/ou une inductance statorique.

4. Procédé selon l'une des revendications précédentes, en ce qu'un arc tangente ou une fonction arc cotangente, en particulier une fonction arctg2 ou arccot2, est utilisée pour calculer la première information d'angle de courant (45) et/ou la seconde information d'angle de courant (46).

5. Procédé selon l'une des revendications précédentes, en ce que le décalage de mesure est déterminé par soustraction des angles de courant représentés par la première information d'angle de courant (45) et la seconde information d'angle de courant (46).

6. Procédé selon l'une des revendications précédentes, en ce que le signal de commande (44) est fourni à un dispositif de commutation mécanique (54) connecté aux lignes de phase (17).

7. Procédé selon l'une des revendications 1 à 5, en ce que le signal de commande (44) est fourni à l'onduleur (6) qui court-circuite activement les lignes de phase (17) en commandant des éléments de commutation (12, 14) à semi-conducteurs de l'onduleur (6).

8. Procédé selon la revendication 7, en ce que les éléments de commutation (12, 14) à semi-conducteurs sont disposés en demi-ponts (11) raccordés entre un haut potentiel (13) et un bas potentiel (15) d'une liaison CC de l'onduleur, en ce que pour court-circuiter activement les lignes de phase (17) soit les éléments de commutation (12) raccordés au haut potentiel (13) sont commandés pour être connectés et les éléments de commutation (14) raccordés au bas potentiel (15) sont commandés pour être déconnectés ou les éléments de commutation (14) raccordés au bas potentiel (15) sont commandés pour être connectés et les éléments de commutation (12) raccordés au haut potentiel (13) sont commandés pour être déconnectés.

9. Procédé selon la revendication 6 ou 7, en ce que la seconde information d'angle de courant (46) est basée en outre sur une information de tension de chemin de commutation (42b) représentant une chute de tension sur un chemin de commutation des éléments de commutation (12, 14) et/ou une information de courant de court-circuit (42c) représentant un courant de court-circuit le long des lignes de phase (17).

10. Procédé selon l'une des revendications précédentes, en ce qu'une vitesse de rotation d'au moins 500 min-1 et/ou au plus de 15000 min-1 est utilisée.

**11.** Procédé selon l'une des revendications précédentes, en ce que le capteur de position de rotor (2) est un résolveur.

**12.** Procédé selon l'une des revendications précédentes, en ce que la machine électrique (4) est disposée sur un banc d'essai, en particulier durant un test en fin de chaîne, lorsque les lignes de phase sont court-circuitées.

**13.** Procédé selon l'une des revendications précédentes, en ce qu'une information de décalage de mesure (43) représentant le décalage de mesure déterminé est transmise à l'onduleur (6) afin d'y être mémorisée.

**14.** Procédé selon la revendication 13, en ce que l'information de décalage de mesure mémorisée (43) est utilisée afin de corriger de futures informations de position de rotor (22) fournies par le capteur de position de rotor (2).

**15.** Appareil (1) pour déterminer un décalage de mesure d'un capteur de positon de rotor (2) affecté à un rotor (3) d'une machine électrique (4), en ce que l'appareil (1) est conçu pour réaliser un procédé selon l'une des revendications 1 à 13, lorsque des enroulements du stator de la machine électrique (4) sont alimentés via des lignes de phase (17) entre l'onduleur (6) et les enroulements du stator, l'onduleur (6) comprenant des éléments de commutation (12, 14) conçus pour court-circuiter les lignes de phase (17).

**Fig. 1**

**Fig. 2**

# Fig. 3

S1

S2

S3

S4

S5

S6

S7

S8

**Fig. 4**

**Fig. 5**

**EP 3 503 378 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015106043 A1